# EUROPEAN PATENT SPECIFICATION

(11) **EP 2 055 070 B1**
(45) Date of publication and mention of the grant of the patent: **31.03.2010**
(21) Application number: 06777045.3
(22) Date of filing: 23.08.2006
(51) Int. Cl.: H04L 29/06

(54) **METHOD FOR REGISTERING IN AN IMS DOMAIN A NON-IMS USER DEVICE**
VERFAHREN ZUM REGISTRIEREN EINER NICHT-IMS-BENUTZEREINRICHTUNG IN EINER IMS-DOMÄNE
PROCÉDÉ POUR L'ENREGISTREMENT D'UN DISPOSITIF UTILISATEUR NON IMS DANS UN DOMAINE IMS

(43) Date of publication of application: 06.05.2009
(73) Proprietor: Telefonaktiebolaget LM Ericsson (publ), 164 83 Stockholm (SE)
(72) Inventor: WITZEL, Andreas, 52134 Herzogenrath (DE); KELLER, Ralf, 52146 Würselen (DE); NORELL, Lennart, S-125 30 Älvsjö (SE); TERRILL, Stephen, E-28006 Madrid (ES)
(74) Representative: von Zmuda-Trzebiatowski, Margarethe
(86) International application number: PCT/EP2006/008294
(87) International publication number: WO 2008/022647

(56) References cited:
- WO-A1-2006/026901
- GB-A- 2 419 774
- US-A1- 2004 153 667

## Description

### Technical Field of the Invention

The present invention generally relates to the field of telecommunications networks including an IMS domain. More specifically, the invention relates to a technique for registering in an IMS domain of a telecommunications network a non-IMS user device.

### Background of the Invention

Fixed and mobile telecommunications networks currently evolve from pure circuit switched networks towards IP-based networks, and may eventually seamlessly integrate with existing IP-based infrastructure, for example the Internet or wireless IP-based networks such as WLAN-networks.

Within modern 3^{rd} generation mobile networks, besides the Circuit Switched (CS) domain and the Packet Switched (PS) domain, as a further domain the IP Multimedia Subsystem (IMS) has been specified by the 3^{rd} Generation Partnership Project (3GPP) as a flexible service delivery platform for the provision of IP-based (multi)media services. For efficient and flexible service provision as well as for reducing costs in network operation and maintenance, services will increasingly be offered in the future based on the flexible IMS framework. This includes that operators will also place service control into the IMS domain for services which so far have been provided by the other domains. For example, the call and service control for classical speech services is performed so far by the CS domain. Prospected network configurations intend however to place call and service control for these services into the IMS domain.

One of the main components of the IMS domain is the Call State Control Function (CSCF), performing session setup and termination control for IMS sessions. A Proxy-CSCF (P-CSCF) terminates a session path at the border of an IMS domain, and the main control functionality is located within a serving CSCF (S-CSCF).

For session control and signalling functionalities, such as session initiation, session modification and session termination for IP-based voice calls (VoIP), multimedia conferences, and similar services related to the transmission of (multi)media data, the IMS uses the Session Initiation Protocol (SIP). SIP offers services similar to telephony protocols such as the ISUP (ISDN User Part), but in an IP context. An important logical entity within the SIP framework, terminating a SIP session towards a user, is the user agent. User agents initiate session requests and are usually their destination.

A user agent has to register in the IMS domain, i.e. it has to announce an association or binding of user-related address information to address information related to the user device on behalf of which the user agent acts. The address information may for example comprise SIP-URIs (Uniform Resource Identifiers). By registration the IMS learns a particular way to contact a user, i.e. the corresponding IMS registry stores a particular user contact. A user may of course register more than one contact. Mechanisms for selecting one out of multiple registered contacts make use of contact attributes, for example the user capability and the q-value (a priority value). These attributes are provided by the user agent during registration.

Although the number of services based on IMS increases, many terminal devices currently in use are not IMS-enabled, and a large number of user devices is adapted for use with the CS domain and/or the PS domain only. For example, many PLMN (Public Land Mobile Network) devices are sold today which are enabled for the 'classical' GSM services only, basically comprising speech services and SMS (Short Message Service). Techniques are thus required to enable for the IMS domain a control of CS services for pure CS terminals. Further, within the framework of converging networks, techniques are required that enable for the IMS domain for a control of services for fixed network or PSTN (Public Switched Telephone Network) terminals.

US 2004/0153667 A1 discloses a method for registering in an IMS domain of a telecommunication network a non-IMS user device.

Whereas CS terminals achieve access via the CS domain, for IMS service provision a registration of the terminal device in the IMS domain is required. As initially mentioned, the registration binds address information of the user device to address information of the user. Such a registration may be performed by a registration control function collocated to an MSC (Mobile Switching Center), with the registration control function acting as a user agent in response to events related to the CS terminal in the CS domain, e.g. the attachment or detachment of the user device. In addition, possibly a media gateway function may be provided for forwarding media data, for example speech data or transparent data according to UDI/RDI (Un/Restricted Digital Information), from the IMS domain to the CS domain and vice versa.

However, a mandatory collocation of the registration function (and the media gateway control function) with the MSC does not allow for flexible network topologies. For example, this solution will in general not scale. Further, for enabling IMS access for PSTN devices the solution is not appropriate. Therefore, a standalone registration control function or standalone registration control node will be required, which is not collocated to any particular MSC (or other network node). For such standalone devices, the connection to the CS domain or a PSTN would be based on the ISUP (ISDN User Part) protocol only. There is however no interworking defined between any such standalone registration control function and a CS domain or PSTN.

Accordingly, there is a need for a flexible technique of registering in an IMS domain a non-IMS terminal device.

### Summary of the Invention

The invention is defined in independent method claims 1, 9 and 11, in independent computer program claim 13, in the registration control node according to claim 15, the registration server according to claim 17 and the user registry according to claim 18.

According to a first aspect of the invention, a method of registering in an IMS domain of a telecommunications network a first non-IMS user device of a user is proposed, wherein the method comprises the steps of receiving a notification of an event related to a network registration of a second user device of the user in the network; and initiating, based on the notification, a transaction related to an IMS registration of the first user device in the IMS domain.

The first user device may be a PLMN or PSTN terminal device. For example, the device may be one of a CS terminal, PS terminal or PSTN device. The second user device may be an IMS-enabled user equipment, but may also be any other device adapted for use with and registration in the telecommunications network.

The event may be one of a registration, refresh, de-registration or time-out of the network registration of the second user device in the network. The network registration may be a registration in the IMS domain, but may also be a registration in another domain of the or any network, for example an attachment or detachment of the second user device in the CS domain. The notification may be received from a registration server in the network. In case of an IMS registration of the second user device, the registration server may be a CSCF in the IMS domain.

The transaction may comprise one of a registration, refresh or de-registration of the first non-IMS user device in the IMS domain. For example, for the first user device being a CS device, a registration message for binding an MSISDN (Mobile subscriber ISDN Number) of the device to an IMS user identity may be prepared and sent to a registration server in the IMS domain.

Initiating the transaction may comprise extracting user identity information from the notification. The user identity information may represent a user identity of the user in the IMS domain, or another domain or network. For example, the notified user identity may comprise the IMPU (IP Multimedia Public Identity) of the user used in the network registration for the second user device for binding an URI of the second user device to the IMPU.

Initiating the transaction may comprise associating, based on the user identity information, an IMS user identity of the user with a device address of the first non-IMS device. The IMS user identity is a public user identity and may be an IMPU of the user. For example, a notified user identity represented by the user identity information may be the IMS user identity; the notified user identity is then extracted from a notification message and is stored in association to the device address.

The device address may be an address information appropriate for addressing the first user device in the access network to which the first device is attachable. The device address may for example be an MSISDN (the first user device being a CS terminal) or a PSTN number (the first user device being a PSTN device).

The transaction may further comprise indicating the association of IMS user identity and device address to the IMS domain. This may be indicated by announcing a contact profile of the user to the IMS domain, wherein the contact is related to a public user identity of the user (the IMS user identity) and comprises at least a contact address and possibly further parameters. As an example, the contact address may comprise a network address of a registration control node. A contact capability, if specified, may comprise one or more CS capabilities (e.g., 'audio'). The device address itself may or may not be announced to the IMS domain.

Initiating the transaction may comprise determining the IMS user identity from a mapping of the user identity information and the IMS user identity. Such a mapping may for example allow determination of a default IMS user identity to be used for registering non-IMS devices of the user or a default IMS user identity for user identity information representing non-IMS user identities. Initiating the transaction may further comprise receiving the mapping of the user identity information and the IMS user identity from the network. A mapping table may for example be requested from a HSS (Home Subscriber Server) of the IMS domain or from other repositories of subscriber-related data. These steps may be omitted in case a notified user identity represented by the user identity information is used as the IMS user identity. The notified user identity may generally be used for the transaction related to the registration of the non-IMS user device. Or the notified user identity is always used for registering the first non-IMS device in an IMS domain in case the second user device is registered in the IMS domain.

Initiating the transaction may comprise extracting the device address from a list of device addresses of non-IMS devices related to the user. The list may associate the device address(es) with at least one public user identity of the user. Receiving the notification may trigger the registration (or deregistration) of several non-IMS user devices in case the list contains several device addresses. Initiating the transaction may comprise requesting and receiving the list of device addresses from the network. The list may for example be stored in the HSS. The request may include the notified public user identity, the IMS user identity, or another public user identity of the user.

According to a further aspect of the invention, a method of registering in an IMS domain of a telecommunications network a first non-IMS user device of a user is proposed, wherein the method comprises the steps of detecting an event related to a network registration of a second user device of the user in the network; and transmitting a notification of the event to initiate a transaction related to an IMS registration of the first user device in the IMS domain.

For detecting the event an event listener may be executed in a registration server in the network, for example in a CSCF of an IMS domain. The event listener may detect events related to many users registering their contacts in the server. User identity information from the network registration may be included in the notification as a notified user identity. The notification message may alternatively include user identity information representing a non-IMS user identity, for example in case of network registrations other than IMS registrations.

According to a further aspect of the invention, a method of registering in an IMS domain of a telecommunications network a non-IMS user device of a user is proposed, wherein the method comprises the step of provisioning a list of device addresses of non-IMS user devices related to the user. The list may for example be provided by a HSS associated to the IMS domain of the network. The list includes at least the device address of the first non-IMS user device of the user.

The method may comprise the further step of storing a received association of a device address of the non-IMS user device and a contact profile of the user. The association may be received from a registration control node.

According to a still further aspect of the invention, a computer program is proposed, which comprises program code portions for performing the steps of any one of the method aspects of the invention discussed herein, when the computer program is executed on one or more computing devices. The computer program may be stored on a computer readable recording medium.

According to another aspect of the invention, a registration control node for registering in an IMS domain of a telecommunications network a first non-IMS user device of a user is proposed, wherein the registration control node comprises a first interface adapted for receiving a notification of an event related to a network registration of a second user device of the user in the network; and a transaction component adapted for initiating, based on the notification, a transaction related to an IMS registration of the first user device in the IMS domain. The registration control node may further comprise a second interface adapted for indicating an association of an IMS user identity of the user with a device address of the non-IMS device to the IMS domain.

According to a further aspect of the invention, a registration server for registering in an IMS domain of a telecommunications network a first non-IMS user device of a user is proposed, wherein the registration server comprises a detection component adapted for detecting an event related to a network registration of a second user device of the user in the network; and a notification component adapted for transmission of a notification of the event to initiate a transaction related to an IMS registration of the first user device in the IMS domain.

According to a still further aspect of the invention, a registry for registering in an IMS domain of a network a non-IMS device of a user is proposed, wherein the registry comprises a provisioning component adapted for providing a list of device addresses of non-IMS devices related to the user.

### Brief Description of the Drawings

In the following, the invention will be described with reference to exemplary embodiments illustrated in the figures, wherein:
- Fig. 1: schematically illustrates the network topology of an IMS domain according to an embodiment of the invention;
- Fig. 2: schematically illustrates an embodiment of a registration control node according to the invention;
- Fig. 3: schematically illustrates an embodiment of a registration server according to the invention;
- Fig. 4: schematically illustrates an embodiment of a user registry according to the invention;
- Fig. 5: is a flow chart illustrating a first embodiment of a method for registering a non-IMS terminal device in an IMS domain according to the invention;
- Fig. 6: is a flow chart illustrating a second method embodiment of the invention;
- Fig. 7: is a flow chart illustrating a third method embodiment of the invention; and
- Fig. 8: is a flow chart illustrating a fourth method embodiment of the invention.

### Detailed Description of Preferred Embodiments

In the following description, for purposes of explanation and not limitation, specific details are set forth, such as particular network topologies, network nodes etc., in order to provide a thorough understanding of the current invention. It will be apparent to one skilled in the art that the current invention may be practised in other embodiments that depart from these specific details. For example, the skilled artisan will appreciate that in an implementation of the current invention there may be other or more network components be involved, which might include registration servers or subscriber registries to be developed in the future. Also, the invention may be practised for various PLMN or PSTN access networks.

Those skilled in the art will further appreciate that functions explained hereinbelow may be implemented using individual hardware circuitry, using software or firmware functioning in conjunction with a programmed microprocessor or a general purpose computer, using an application specific integrated circuit (ASIC) and/or using one or more digital signal processors (DSPs). It will also be appreciated that when the current invention is described as a method, it may also be embodied in a computer processor and a memory coupled to a processor, wherein the memory is encoded with one or more programs that perform the methods disclosed herein when executed by the processor.

The term 'interface' as used herein comprises 'functional interfaces'. A functional interface designates a sub-structure contained within a functional component or structure (a hardware, firmware and/or software component or functional entity) intended for communication with other, external components or structures. A functional interface may be purely software-implemented, for example if the structure, for which the functional interface provides the interfacing functionality, is a software component.

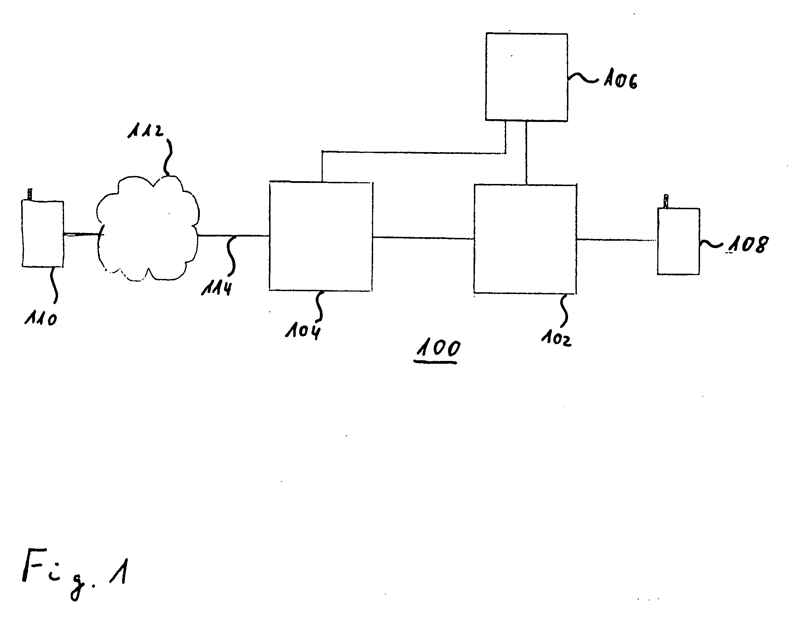

Fig. 1 schematically illustrates an embodiment 100 of an IMS domain comprising a CSCF 102, an access control node 104 and an HSS 106. The CSCF 102 acts as a registration server for a user device 108, which may communicate with the CSCF 102 for registering in the IMS domain 100. A further user device 110 is associated to the user (subscriber) of the device 108. For example, the user may own the device 110 or it is provided for use to him, e.g. by the employer of the user. The device 110 is served by a CS domain 112, which is connected to the IMS domain 100 via a link 114, which may be an ISUP connection. In other embodiments, the network (subsystem) 112 may for example be a PSTN.

For provisioning of services from the IMS domain 100 to the device 110 and related service control, i.e. to enable access of user device 110 to the IMS domain 100, a registration of the device 110 in the IMS domain 100 is required. The access control node 104 acts as a registration control node, controlling a registration of the CS-based device 110 in the IMS domain 100. The registration control node 104 will register the user device 110 at the registration server 102 when triggered accordingly from a registration of the user device 108 at the registration server 102, as will be described in detail in the following. The access control node 104 further acts as a media gateway control function and media gateway for conveying data between the CS device 110 and the IMS domain 100 (more precisely, between the ISUP connection 114 and a transport network controlled by the IMS domain 100). The HSS 106 serves as a user registry for user/subscriber related data.

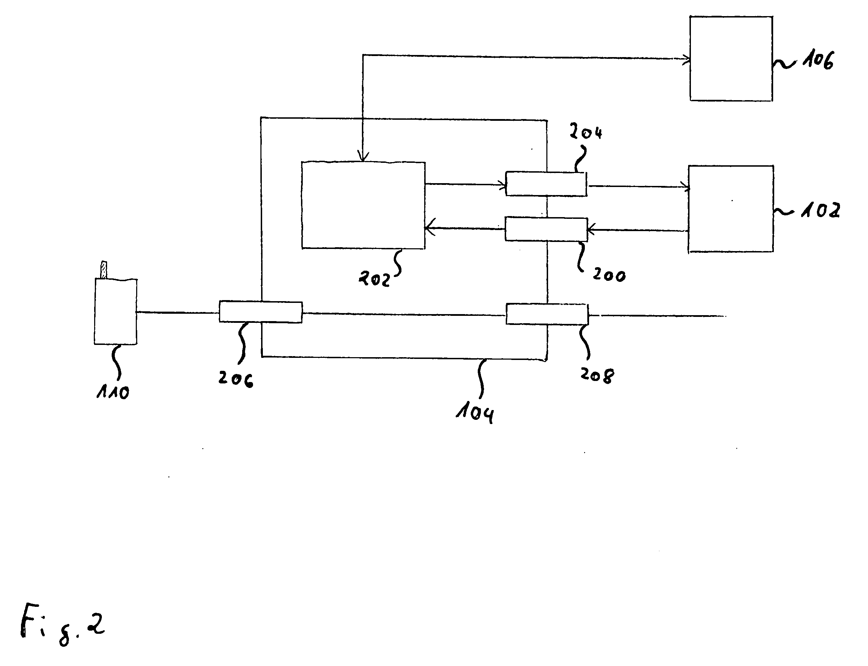

Fig. 2 is a schematic block diagram illustrating the functional components of an embodiment of the access control node 104 of Fig. 1. The registration server 102, the user registry 106 and the user device 110 have been described already above.

The control node 104 comprises an interface component 200 for receiving a notification message from the registration server 102. The notification message represents a notification of an event detected at the registration server 102, which is related to a network registration, for example a registration in the IMS domain 100 (see Fig. 1). The registration control node 104 further comprises a transaction component 202 for initiating, based on the notification message received via the interface 200, a transaction related to an IMS registration of the user device 110 in the IMS domain 100. The transaction component 202 is further adapted for requesting and retrieving from the HSS 106 a list of non-IMS user devices associated to a public user ID of the user. This list may in particular contain the MSISDN of the user device 110.

The registration control node 104 further comprises a second interface component 204 for registering the user device 110 at the registration server 102. The transaction component 202 may be further adapted for pushing a list of registered device addresses to the HSS 106. The node 104 acts as an access control node for the user device 110 and therefore further comprises an ISUP interface 206 and an IP device 208 for conveying user data (e.g., speech data) between the user device 110 and a transport network controlled by the IMS domain 100.

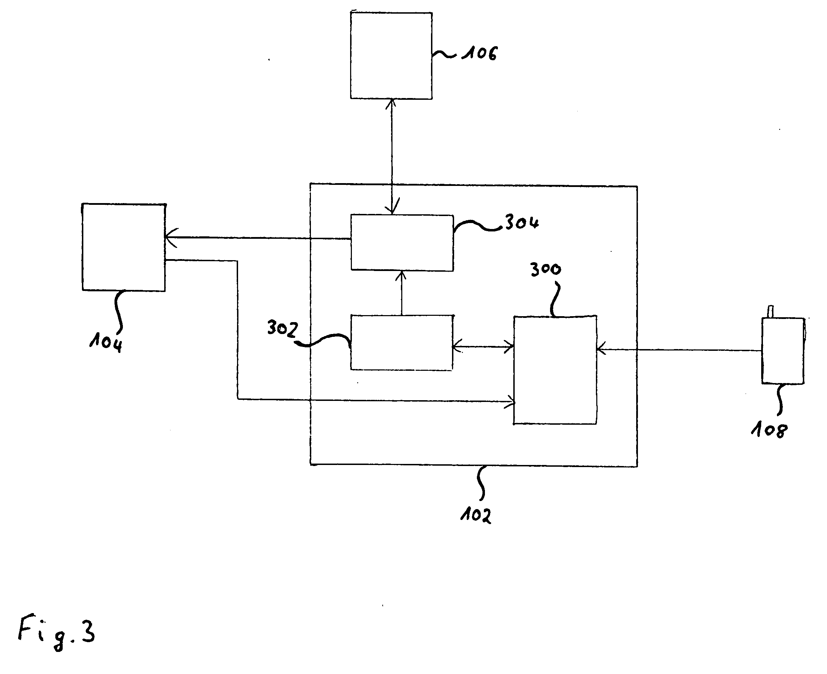

Fig. 3 is a schematic block diagram illustrating the functional components of an embodiment of the registration server 102 of Fig. 1. The access control node 102, the user registry 106 and the user device 108 have been described already above.

The registration server 102 comprises an interface component 300, which is adapted for receiving communications related to a network registration of the IMS user device 108. The communications comprise registration, re-registration or deregistration requests. The interface component further may receive registration requests from the registration control node 104.

The registration server 102 further comprises a detection component 302, which is adapted for detecting events related to an IMS registration of the IMS user device 108. The detection component 302 may for example comprise an event listener, which scans the activity of the interface component 300 and identifies relevant de/registration events. The detection component may further be communicatively coupled to a storage component (not shown) storing a valid registration of the device 108, such that the detection component may detect a time-out of a valid registration.

In case of any of the aforementioned registration events, the detection component 302 identifies a public user identity of the user of the device 108, for example from the incoming request message or from the registration stored in the storage component. The public user identity may comprise an IMPU of one or more IMPUs used by the subscriber.

The detection component forwards the identified public user identity to a notification component 304. The notification component 304 retrieves on reception of the user identity initial filter criteria (IFC) from the user registry 106, which indicate a network address of the registration control node 104 associated to the non-IMS user device 110 to be registered (the IFC are user-related). The notification component 304 constructs a notification message to trigger a third party registration at the registration control node 104. The notification message contains the public user identity forwarded from the detection component 302. The notification message is sent to the registration control node 104, as indicated by the IFC. Triggered by the notification message, the control node 104 registers the non-IMS device 110 by sending an appropriate registration request to the interface component 300. In case such a (third party) registration is received from a registration control node, for example the registration control node 104, the detection component 302 may not trigger the notification component for sending a notification message to the access control node.

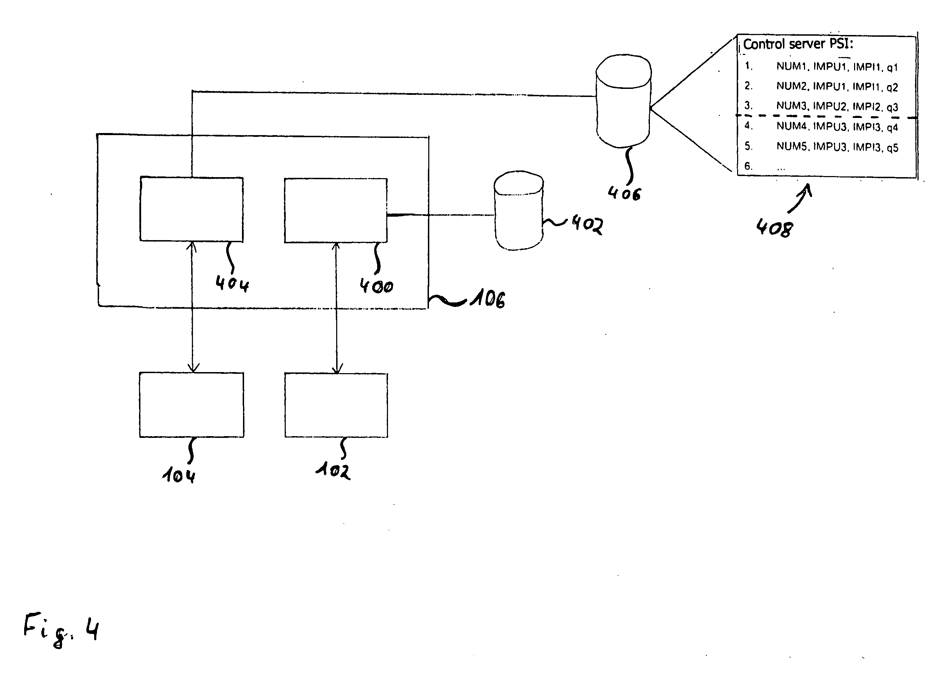

Fig. 4 is a schematic block diagram illustrating the functional components of an embodiment of the user registry 106 of Fig. 1. The access control node 104 and the registration server 102 have been described already above.

The registry 106 comprises an IFC provisioning component 400, which is adapted to provide to the registration server 102 on request the initial filter criteria related to a particular public user ID. The association of public user ID(s) and initial filter criteria for any particular user are stored in a storage component 402 associated to the user registry 106.

The registry 106 further comprises an address provisioning component 404, which is adapted to provide a list of device addresses of non-IMS devices of a user on request to the registration control node 104. The device addresses are stored in a storage component 406 associated to the registry 106. An example of data held in the storage component 406 is illustrated in the enlarged portion 408. In association to a PSI (Public Service Identity, for example a SIP-URI) identifying the registration control node 104 a number of data records are stored. Each data record contains an MSISDN number (NUM1, NUM2, ...) of a non-IMS user device. Associated to each number is a public user ID in IMPU-format (IMPU1, IMPU2, ...) of the user/subscriber of the non-IMS device. Further, a private user ID (typically device-related) in IMPI-format (IMPI1, IMPI2, ...) is given. Still further, any data record contains a q-factor.

In the example illustrated by the portion 408, the first three data records may belong to a particular subscriber, which owns the public user identity IMPU1 and IMPU2. On receiving from the registration control node 104 a request indicating, for example, the user identity IMPU1, the provisioning component 404 will extract the first three data records from the portion 408 and will sent at least part of the data records as a list of device addresses of the user to the access control node 104.

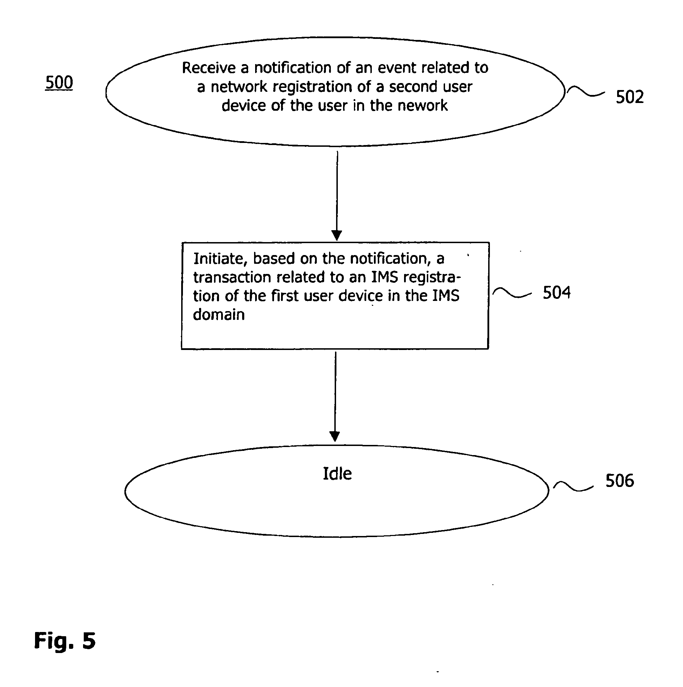

Fig. 5 is a flowchart illustrating an embodiment 500 of a method of registering in an IMS domain of a telecommunications network a first non-IMS user device of a user. The method is triggered in step 502 by receiving a notification of an event related to a network registration of a second user device of the user in the network. In step 504, a transaction is initiated based on the notification, wherein the transaction is related to an IMS registration of the first user device in the IMS domain. Having initiated the transaction, the method ends in step 506 with, for example, a registration control node being idle and waiting for receiving further notifications.

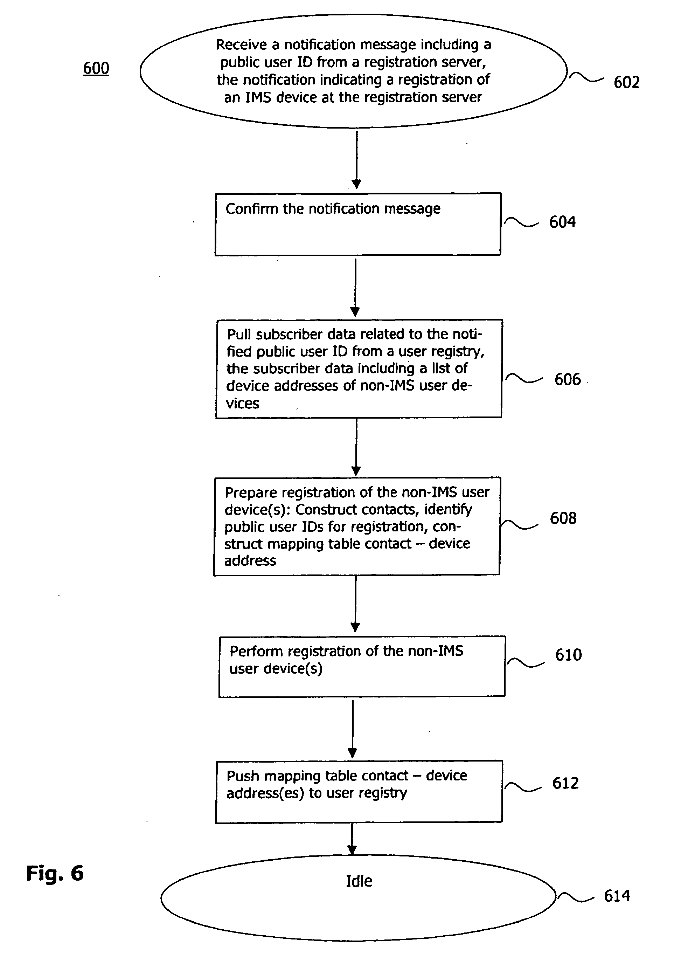

Fig. 6 is a flowchart illustrating a further embodiment 600 of a method of registering in an IMS domain a non-IMS user device. The steps of the method will be illustrated with reference to the IMS domain illustrated in Fig. 1 and the registration control node 104 of Fig. 2.

The method starts in step 602 with the reception of a notification message from the registration server 102 at the first interface 200 of the registration control node 104. The notification message contains a public user ID of a user, which he or she has used to register the IMS user equipment 108 with the registration server 102. In step 604, the registration control node 104 confirms the notification message by sending an OK message to the registration server 102. In step 606 the control node 104 requests and receives subscriber data related to the notified public user ID from the user registry 106. The subscriber data includes a list of device addresses of non-IMS user devices of the user, in particular the device address (MSISDN) of the device 110. Each device address is associated to one of one or more public user IDs of the user.

In step 608 the transaction component 202 of the access control node 104 prepares a registration transaction. The transaction component constructs a contact for each of the received device addresses. Only the preparation for registering the CS device 110 will be described. The contact for the CS device 110 specifies as a contact address particular address information related to the access control node 104; the address information may e.g. comprise a network address of the node 104. The contact may further indicate as a capability 'audio', as a q-value the value specified by the IMS domain 100 for CS devices (for example a value of 0.5) and possibly further information.

The transaction component further constructs a mapping table, wherein each contact is associated to its related device address. This is a prerequisite, e.g., for forwarding a call to the registered non-IMS devices. For example, the contact for the CS device 110 is associated to the MSISDN of the device 110.

The transaction component further identifies a particular IMS-related public user ID of the user for registering each contact. This IMS user identity may be any one of the notified user identity received from the registration server 102, the further public user identities received from the user registry 106, and a default public user identity for registering non-IMS devices of the user. In case that the notified user identity is not generally used for registration, the registration control node may store a mapping, wherein user identities of the user including at least the notified user identity are mapped onto the default IMS user identity to be used for registering non-IMS devices.

Eventually the transaction component 202 hands over data to the interface component 204 which include the identified IMS user identity and the contact. From these data the interface component 204 constructs a registration message. In step 610, the registration of the non-IMS user device 110 is initiated by sending the registration message from the second interface component 204 to the registration server 102. The registration message thus indicates the association of the IMS user identity with the device address of the non-IMS device 110 to the IMS domain 100 (the device address itself is not announced to the IMS domain).

Further registration requests may be sent for other non-IMS devices of the user. For example, several PLMN / PSTN phone numbers may be registered for a user. The registrations may be performed for the same or different IMS public user identities of the user.

In step 612, in case of a successful registration, a mapping table containing the contacts with associated device addresses is pushed into the user registry 106. In step 614, the method ends and the registration control node 102 is idle.

The method 600 couples a registration of a non-IMS device to the registration of an IMS device. A use case for this method is related to registering a mobile device in case a fixed user device, for example a SIP phone, is registered at a workplace. The mobile device may be used when the user is not sitting at the workplace. In other embodiments, the registration of the non-IMS device may be triggered by a deregistration or a timeout of a registration of an IMS (SIP) phone. In these cases, an automatic registration of a mobile CS terminal may for example ensure reachability of a user. In other embodiments, the registration of a user device in IMS may trigger the deregistration of a CS terminal or a PSTN device. In a still further embodiment, a step of preparing a transaction may comprise to prepare a deregistration in case a non-IMS device is already registered. In case the non-IMS device is not registered, a registration is prepared and performed only in case a notified event was a registration request (in another embodiment: a deregistration request). In other embodiments, part of the decision logic illustrated as being part of the registration control node may be implemented in the registration server, such that, e.g., a notification message is sent only in case a registration of the non-IMS device is to be triggered.

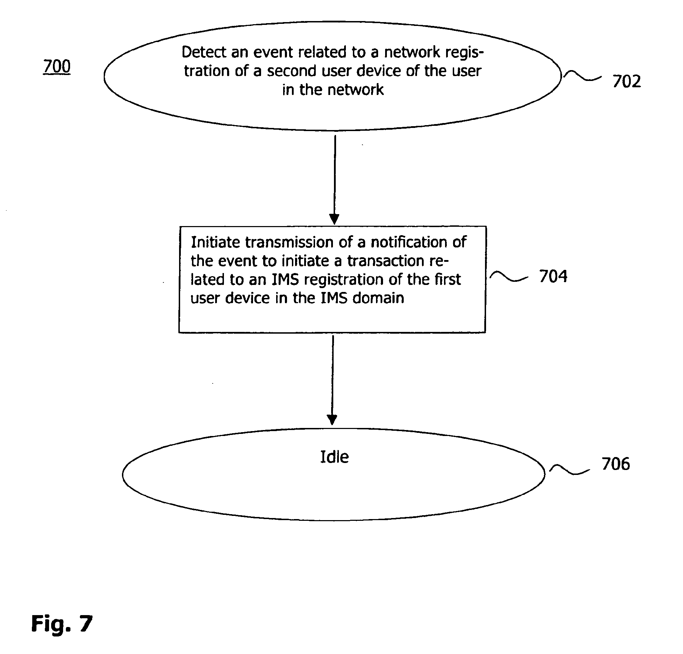

Fig. 7 is a flowchart illustrating another embodiment 700 of a method of registering in an IMS domain of a telecommunications network a first non-IMS user device of a user. The method is illustrated with reference to the registration server 102 of Fig. 3.

The method is triggered in step 702 by detecting an event related to a network registration of a second user device of the user in the network. The event may for example be the reception of a registration request for the user device 108 in the interface component 300 of the registration server 102.

In step 704, the notification component 304 initiates the transmission of a notification of the event for the purpose of initiating a transaction related to an IMS registration of the first user device in the IMS domain. The step of initiating the transaction may comprise retrieving from the user registry 106 initial filter criteria, wherein the IFC contain an address information of the access control node 104. The methods ends in step 706, wherein the registration server is idle and waits for further registration requests.

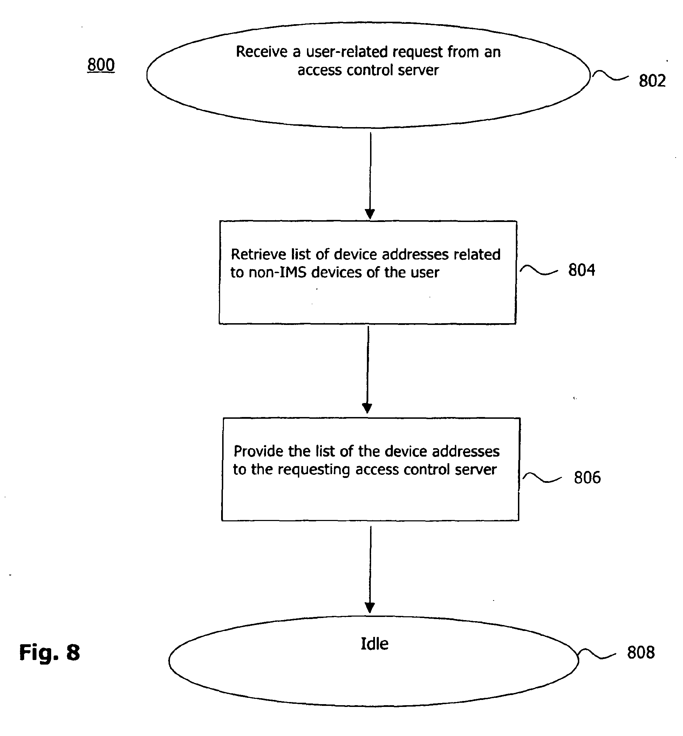

Fig. 8 is a flowchart illustrating an embodiment 800 of a method for registering in an IMS domain a non-IMS device of a user. The method will exemplarily be discussed with reference to the subscriber registry 106 of Fig. 4.

The method is triggered in step 802 by the reception of a request from the access control node 104. In response to the request, in step 804 the provisioning component 404 retrieves from the storage 406 the list of device addresses related to non-IMS devices of the user, who is indicated by the public user ID contained in the request of step 802. In step 806, the list of device addresses is provided to the requesting access control node 104. The method ends in step 808, the user registry being idle and waiting for further requests.

The invention provides for a flexible technique of registering in an IMS domain a non-IMS terminal device. The technique allows for example a reuse of the CS access for providing speech services by the IMS domain. Modifications in the CS domain, e.g. at the MSC, are not required. Further, the invention enables a flexible interworking of legacy terminals with an IMS domain, i.e. a legacy terminal can easily be used for IMS-based services. Still further, the inventive technique scales with increasing number of subscribers.

While the current invention has been described in relation to its preferred embodiments, it is to be understood that this disclosure is for illustrative purposes only. Accordingly it is intended that the invention be limited only by the scope of the claims appended hereto.

## Claims

1. A method of registering in an IP Multimedia Subsystem, IMS, domain of a telecommunications network a first non-IMS user device of a user, wherein the method comprises the following steps:
- receiving (502, 602) a notification of an event related to a network registration of a second user device of the user in the network; and
- based on the notification, initiating (504, 610) a transaction related to an IMS registration of the first non-IMS user device in the IMS domain.

2. The method according to claim 1,
wherein initiating the transaction comprises extracting user identity information from the notification, and wherein optionally a notified user identity represented by the user identity information is used as the IMS user identity.

3. The method according to claim 2,
wherein initiating the transaction comprises associating (608), based on the user identity information, an IMS user identity of the user with a device address of the first non-IMS device; and wherein the transaction comprises indicating the association to the IMS domain.

4. The method according to claim 3,
wherein initiating the transaction comprises determining the IMS user identity from a mapping of the user identity information and the IMS user identity, and wherein the mapping of the user identity information and the IMS user identity is in particular received from the network.

5. The method according to any one of the preceding claims,
wherein initiating the transaction comprises extracting the device address from a list of device addresses of non-IMS devices related to the user.

6. The method according to claim 5,
wherein initiating the transaction comprises requesting (606) and receiving the list of device addresses from the network.

7. The method according to any one of the preceding claims,
wherein the event is one of a registration (602), refresh, de-registration or time-out of the network registration of the second user device in the network, and/or wherein the transaction comprises one of a registration (610), refresh or de-registration of the first non-IMS user device in the IMS domain.

8. The method according to any one of the preceding claims,
wherein the first user device is a PLMN or PSTN terminal device (110) and/or
wherein the second user device is an IMS-enabled user equipment (108) and/or
wherein the network registration is a registration in the IMS domain (100).

9. A method of registering in an IP Multimedia Subsystem, IMS, domain of a telecommunications network a first non-IMS user device of a user, wherein the method comprises the following steps:
- detecting (702) an event related to a network registration of a second user device of the user in the network; and
- initiating (704) transmission of a notification of the event to initiate a transaction related to an IMS registration of the first non-IMS user device in the IMS domain.

10. The method according to claim 9,
wherein user identity information of the network registration is included in the notification as a notified user identity.

11. A method of registering in an IP Multimedia Subsystem, IMS, domain of a telecommunications network a non-IMS user device of a user, wherein the method comprises the steps of
- receiving (802) a request indicating a user identity of the user, wherein the request is received from a registration control node for registering the non-IMS user device at an IMS registration server and the request is based on a reception, in the registration control node, of a notification of an event related to a network registration of a second user device of the user in the network; and
- providing (806), in response to the request, a list of device addresses of non-IMS user devices related to the user indicated by the user identity to the registration control node.

12. The method according to claim 11,
comprising the further step of storing a received association of a device address of the non-IMS user device and a contact profile of the user.

13. A computer program comprising program code portions for performing the steps of any one of the preceding method claims when the computer program is executed on one or more computing devices.

14. The computer program of claim 13, stored on a computer readable recording medium.

15. A registration control node (104) for registering in an IP Multimedia Subsystem, IMS, domain (100) of a telecommunications network a first non-IMS user device (110) of a user, wherein the registration control node comprises:
- a first interface component (200) adapted for receiving a notification of an event related to a network registration of a second user device (108) of the user in the network; and
- a transaction component (202) adapted for initiating, based on the notification, a transaction related to an IMS registration of the first non-IMS user device in the IMS domain.

16. The registration control node according to claim 15,
further comprising a second interface component (204) adapted for indicating an association of an IMS user identity of the user with a device address of the non-IMS device to the IMS domain.

17. A registration server (102) for registering in an IP Multimedia Subsystem, IMS domain (100) of a telecommunications network a first non-IMS user device (110) of a user, wherein the registration server comprises:
- a detection component (302) adapted for detecting an event related to a network registration of a second user device (108) of the user in the network; and
- a notification component (304) adapted for initiating transmission of a notification of the event to initiate a transaction related to an IMS registration of the first non-IMS user device in the IMS domain.

18. A user registry (106) for registering in an IP Multimedia Subsystem, IMS, domain (100) of a network a non-IMS device (110) of a user, wherein the registry comprises a provisioning component (404) adapted for receiving a request indicating a user identity of the user,
wherein
the request is received from a registration control node for registering the non-IMS user device at an IMS registration server and the request is based on a reception, in the registration control node, of a notification of an event related to a network registration of a second user device of the user in the network, and the provisioning component is further adapted for providing, in response to the request, a list of device addresses of non-IMS devices related to the user indicated by the user identity to the registration control node.

## Patentansprüche

1. Verfahren zur Anmeldung eines ersten Nicht-IMS-Teilnehmergeräts eines Teilnehmers in einer IP-Multimedia-Subsystem-, IMS-Domäne eines Telekommunikationsnetzes, wobei das Verfahren die folgenden Schritte umfasst:
- Empfangen (502, 602) einer Meldung eines Ereignisses in Bezug auf eine Netzanmeldung eines zweiten Teilnehmergeräts des Teilnehmers im Netz; und
- Einleiten (504, 610) auf der Basis der Meldung einer Transaktion in Bezug auf eine IMS-Anmeldung des ersten Nicht-IMS-Teilnehmergeräts in der IMS-Domäne.

2. Verfahren nach Anspruch 1,
wobei das Einleiten der Transaktion ein Extrahieren von Teilnehmerkennungsinformationen aus der Meldung umfasst, und wobei optional eine gemeldete Teilnehmerkennung, die durch die Teilnehmerkennungsinformationen dargestellt wird, als die IMS-Teilnehmerkennung verwendet wird.

3. Verfahren nach Anspruch 2,
wobei das Einleiten der Transaktion ein Assoziieren (608) auf der Basis der Teilnehmerkennungsinformationen einer IMS-Teilnehmerkennung des Teilnehmers mit einer Geräteadresse des ersten Nicht-IMS-Geräts umfasst; und
wobei die Transaktion ein Hinweisen der IMS-Domäne auf die Assoziation umfasst.

4. Verfahren nach Anspruch 3,
wobei das Einleiten der Transaktion ein Bestimmen der IMS-Teilnehmerkennung aus einer Zuordnung der Teilnehmerkennungsinformationen und der IMS-Teilnehmerkennung umfasst, und wobei die Zuordnung der Teilnehmerkennungsinformationen und der IMS-Teilnehmerkennung insbesondere vom Netz empfangen wird.

5. Verfahren nach einem der vorhergehenden Ansprüche,
wobei das Einleiten der Transaktion ein Extrahieren der Geräteadresse aus einer Liste von Geräteadressen von Nicht-IMS-Geräten in Bezug auf den Teilnehmer umfasst.

6. Verfahren nach Anspruch 5,
wobei das Einleiten der Transaktion ein Anfordern (606) und Empfangen einer Liste von Geräteadressen vom Netz umfasst.

7. Verfahren nach einem der vorhergehenden Ansprüche,
wobei das Ereignis eines von einer Anmeldung (602), Auffrischung, Abmeldung oder einem Zeitablauf der Netzanmeldung des zweiten Teilnehmergeräts im Netz ist, und/oder wobei die Transaktion eines von einer Anmeldung (610), Auffrischung oder Abmeldung des ersten Nicht-IMS-Teilnehmergeräts in der IMS-Domäne umfasst.

8. Verfahren nach einem der vorhergehenden Ansprüche,
wobei das erste Teilnehmergerät ein PLMN- oder PSTN-Endgerät (110) ist, und/oder wobei das zweite Teilnehmergerät eine IMS-fähige Teilnehmereinrichtung (108) ist, und/oder wobei die Netzanmeldung eine Anmeldung in der IMS-Domäne (100) ist.

9. Verfahren zur Anmeldung eines ersten Nicht-IMS-Teilnehmergeräts eines Teilnehmers in einer IP-Multimedia-Subsystem- oder IMS-Domäne eines Telekommunikationsnetzes, wobei das Verfahren die folgenden Schritte umfasst:
- Erkennen (702) eines Ereignisses in Bezug auf eine Netzanmeldung eines zweiten Teilnehmergeräts des Teilnehmers im Netz; und
- Einleiten (704) einer Sendung einer Meldung des Ereignisses, um eine Transaktion in Bezug auf eine IMS-Anmeldung des ersten Nicht-IMS-Teilnehmergeräts in der IMS-Domäne einzuleiten.

10. Verfahren nach Anspruch 9,
wobei Teilnehmerkennungsinformationen der Netzanmeldung in der Meldung als eine gemeldete Teilnehmerkennung aufgenommen werden.

11. Verfahren zur Anmeldung eines Nicht-IMS-Teilnehmergeräts eines Teilnehmers in einer IP-Multimedia-Subsystem-, IMS-Domäne eines Telekommunikationsnetzes, wobei das Verfahren die folgenden Schritte umfasst:
- Empfangen (802) einer Anforderung, die eine Teilnehmerkennung des Teilnehmers anzeigt, wobei die Anforderung von einem Anmeldungssteuerknoten zum Anmelden des Nicht-IMS-Teilnehmergeräts bei einem IMS-Anmeldungsserver empfangen wird und die Anforderung auf einem Empfang im Anmeldungssteuerknoten einer Meldung eines Ereignisses in Bezug auf eine Netzanmeldung eines zweiten Teilnehmergeräts des Teilnehmers im Netz basiert; und
- Bereitstellen (806) als Antwort auf die Anforderung einer Liste von Geräteadressen von Nicht-IMS-Teilnehmergeräten in Bezug auf den Teilnehmer, der durch die Teilnehmerkennung angezeigt wird, für den Anmeldungssteuerknoten.

12. Verfahren nach Anspruch 11,
umfassend den weiteren Schritt des Speicherns einer empfangenen Assoziation einer Geräteadresse des Nicht-IMS-Teilnehmergeräts und eines Kontaktprofils des Teilnehmers.

13. Computerprogramm, umfassend Programmcodeabschnitte zum Durchführen der Schritte nach einem der vorhergehenden Verfahrensansprüche, wenn das Computerprogramm auf einem oder mehr Rechengeräten ausgeführt wird.

14. Computerprogramm nach Anspruch 13, das auf einem computerlesbaren Aufzeichnungsmedium gespeichert ist.

15. Anmeldungssteuerknoten (104) zum Anmelden eines ersten Nicht-IMS-Teilnehmergeräts (110) eines Teilnehmers in einer IP-Multimedia-Subsystem-, IMS-Domäne (100) eines Telekommunikationsnetzes, **wobei der** Anmeldungssteuerknoten umfasst:
- eine erste Schnittstellenkomponente (200), die so ausgelegt ist, dass sie eine Meldung eines Ereignisses in Bezug auf eine Netzanmeldung eines zweiten Teilnehmergeräts (108) des Teilnehmers im Netz empfängt; und
- eine Transaktionskomponente (202), die so ausgelegt ist, dass sie auf der Basis der Meldung eine Transaktion in Bezug auf eine MS-Anmeldung des ersten Nicht-IMS-Teilnehmergeräts in der IMS-Domäne einleitet.

16. Anmeldungssteuerknoten nach Anspruch 15,
ferner umfassend eine zweite Schnittstellenkomponente (204), die so ausgelegt ist, dass sie die IMS-Domäne auf eine Assoziation einer IMS-Teilnehmerkennung des Teilnehmers mit einer Geräteadresse des Nicht-IMS-Geräts hinweist.

17. Anmeldungsserver (102) zum Anmelden eines ersten Nicht-IMS-Teilnehmergeräts (110) eines Teilnehmers in einer IP-Multimedia-Subsystem-, IMS-Domäne (100) eines Telekommunikationsnetzes, wobei der Anmeldungsserver umfasst:
- eine Erkennungskomponente (302), die so ausgelegt ist, dass sie ein Ereignis in Bezug auf eine Netzanmeldung eines zweiten Teilnehmergeräts (10) des Benutzers im Netz erkennt; und
- eine Meldungskomponente (304), die so ausgelegt ist, dass sie eine Sendung einer Meldung des Ereignisses einleitet, um eine Transaktion in Bezug auf eine IMS-Anmeldung des ersten Nicht-IMS-Teilnehmergeräts in der IMS-Domäne einzuleiten.

18. Teilnehmer-Anmeldedatenbank (106) zum Anmelden eines Nicht-IMS-Geräts (110) eines Teilnehmers in einer IP-Multimedia-Subsystem- oder IMS-Domäne (100) eines Netzes, wobei die Anmeldedatenbank eine Bereitstellungskomponente (404) umfasst, die so ausgelegt ist, dass sie eine Anforderung empfängt, die eine Teilnehmerkennung des Teilnehmers anzeigt, wobei
die Anforderung von einem Anmeldungssteuerknoten zum Anmelden des Nicht-IMS-Teilnehmergeräts bei einem IMS-Anmeldungsserver empfangen wird und die Anforderung auf der Basis eines Empfangs im Anmeldungssteuerknoten einer Meldung eines Ereignisses in Bezug auf eine Netzanmeldung eines zweiten Teilnehmergeräts des Teilnehmers im Netz basiert, und die Bereitstellungskomponente ferner so ausgelegt ist, dass sie als Antwort auf die Anforderung eine Liste von Geräteadressen von Nicht-IMS-Geräten in Bezug auf den Teilnehmer, der durch die Teilnehmerkennung angezeigt wird, für den Anmeldungssteuerknoten bereitstellt.

## Revendications

1. Procédé d'enregistrement dans un domaine IMS, sous-système multimédia IP, d'un réseau de télécommunications d'un premier dispositif d'utilisateur non-IMS d'un utilisateur, dans lequel le procédé comprend les étapes suivantes consistant à :
- recevoir (502,602) une notification d'un évènement relatif à un enregistrement de réseau d'un second dispositif d'utilisateur de l'utilisateur dans le réseau ; et
- sur la base de la notification, amorcer (504,610) une transaction relative à un enregistrement IMS du premier dispositif d'utilisateur dans le domaine IMS.

2. Procédé selon la revendication 1,
dans lequel l'amorce de la transaction comprend l'extraction d'une information d'identité d'utilisateur hors de la notification, et dans lequel optionnellement une identité d'utilisateur notifiée représentée par l'information d'identité d'utilisateur est utilisée comme l'identité d'utilisateur IMS.

3. Procédé selon la revendication 2,
dans lequel l'amorce de la transaction comprend l'association (608), sur la base de l'information d'identité d'utilisateur, d'une identité d'utilisateur UMS de l'utilisateur avec une adresse de dispositif du premier dispositif non IMS ; et dans lequel la transaction comprend d'indiquer l'association au domaine IMS.

4. Procédé selon la revendication 3,
dans lequel l'amorce de la transaction comprend de déterminer l'identité d'utilisateur IMS à partir d'une mise en correspondance de l'information d'identité d'utilisateur et de l'identité d'utilisateur IMS, et
dans lequel la mise en correspondance de l'information d'identité d'utilisateur et de l'identité d'utilisateur IMS est en particulier reçue en provenance du réseau.

5. Procédé selon une quelconque des revendications précédentes,
dans lequel l'amorce de la transaction comprend d'extraire l'adresse du dispositif d'une liste d'adresses de dispositif de dispositifs non-IMS relatifs à l'utilisateur.

6. Procédé selon la revendication 5, dans lequel l'amorce de la transaction comprend de demander (606) et recevoir la liste des adresses de dispositif en provenance du réseau.

7. Procédé selon une quelconque des revendications précédentes,
dans lequel l'évènement est un enregistrement (602), rafraîchissement ou expiration de l'enregistrement dans le réseau du second dispositif d'utilisateur, et/ou dans lequel la transaction comprend un d'un enregistrement (610), rafraîchissement ou désenregistrement du premier dispositif d'utilisateur non IMS dans la domaine IMS.

8. Procédé selon une quelconque des revendications précédentes,
dans lequel le premier dispositif d'utilisateur est un dispositif de terminal PLMN ou PSTN (110) et/ou dans lequel le second dispositif d'utilisateur est un équipement d'utilisateur fondé sur IMS (108) et/ou
dans lequel l'enregistrement dans le réseau est un enregistrement dans le domaine IMS (100).

9. Procédé d'enregistrement dans un domaine IMS, sous-système multimédia IP, d'un réseau de télécommunication d'un premier dispositif d'utilisateur non IMS d'un utilisateur, dans lequel le procédé comprend les étapes suivantes consistant à :
- détecter (702) un évènement relatif à un enregistrement dans le réseau d'un second dispositif d'utilisateur de l'utilisateur dans le réseau ; et
- amorcer (704) une transmission d'une notification de l'évènement afin d'amorcer une transaction relative à un enregistrement IMS du premier dispositif d'utilisateur dans le domaine IMS.

10. Procédé selon la revendication 9,
dans lequel l'information d'identité d'utilisateur de l'enregistrement dans le réseau est incluse dans la notification comme une identité d'utilisateur notifiée.

11. Procédé d'enregistrement dans un domaine IMS, sous-système multimédia IP, d'un réseau de télécommunication d'un dispositif d'utilisateur non-IMS d'un utilisateur, dans lequel le procédé comprend les étapes consistant à :
- recevoir (802) une demande indiquant une identité d'utilisateur de l'utilisateur, dans lequel la demande est reçue en provenance d'un Noeud de commande d'enregistrement pour enregistrer le dispositif d'utilisateur non-IMS au niveau d'un serveur d'enregistrement IMS et la demande est basée sur une réception, dans le Noeud de commande d'enregistrement, d'une notification d'un évènement relatif à un enregistrement dans la réseau d'un second dispositif d'utilisateur de l'utilisateur dans le réseau ; et
- fournir (806), en réponse à la demande, une liste d'adresses de dispositifs de dispositifs d'utilisateur non IMS relatifs à l'utilisateur indiqués par l'identité d'utilisateur au Noeud de commande d'enregistrement.

12. Procédé selon la revendication 11, comprenant l'étape suivante de mémorisation d'une association reçue d'une adresse de dispositif du dispositif d'utilisateur non-IMS et d'un profil de contact de l'utilisateur.

13. Programme informatique comprenant des portions de code de programme pour effectuer les étapes d'une quelconque des revendications de procédé précédentes quand le programme informatique est exécuté sur un ou plusieurs dispositifs de calcul informatique.

14. Programme informatique selon la revendication 13, mémorisé sur un support d'enregistrement lisible par ordinateur.

15. Noeud de commande d'enregistrement (104) pour enregistrer dans un domaine IMS, sous-système multimédia IP (100), d'un réseau de télécommunication un premier dispositif d'utilisateur non-IMS (110) d'un utilisateur, dans lequel le noeud de commande d'enregistrement comprend :
- un premier composant d'interface (200) adapté pour recevoir une notification d'un évènement relatif à un enregistrement dans le réseau d'un second dispositif d'utilisateur (108) de l'utilisateur ; et
- un composant de transaction (202) adapté pour amorcer, sur la base de la notification, une transaction relative à un enregistrement IMS du premier dispositif d'utilisateur non-IMS dans le domaine IMS.

16. Noeud de commande d'enregistrement selon la revendication 15,
comprenant en outre un second composant d'interface (204) adapté pour indiquer une association d'une identité d'utilisateur IMS de l'utilisateur avec une adresse de dispositif du dispositif non-IMS au domaine IMS.

17. Serveur d'enregistrement (102) pour enregistrer dans un domaine IMS, sous-système multimédia IP (100) d'un réseau de télécommunication un premier dispositif d'utilisateur non-IMS (110) d'un utilisateur, dans lequel le serveur d'enregistrement comprend :
- un composant de détection (302) adapté pour détecter un évènement relatif à un enregistrement dans le réseau d'un second dispositif d'utilisateur (108) de l'utilisateur dans le réseau ; et
- un composant de notification (304) adapté pour amorcer une transmission d'une notification de l'évènement afin d'amorcer une transaction relative à un enregistrement IMS du premier dispositif d'utilisateur non-IMS dans le domaine IMS.

18. Registre d'utilisateur (106) pour enregistrer dans un domaine IMS, sous-système multimédia IP (100), d'un réseau un dispositif non UIMS (110) d'un utilisateur,
dans lequel le registre comprend un composant de provisionnement (404) adapté pour recevoir une demande indiquant une identité d'utilisateur de l'utilisateur,
dans lequel
la demande est reçue depuis un noeud de commande d'enregistrement pour enregistrer le dispositif d'utilisateur non-IMS au niveau d'un serveur d'enregistrement IMS et la demande est basée sur une réception, dans le noeud de commande d'enregistrement, d'une notification d'un évènement relatif à un enregistrement dans le réseau d'un second dispositif d'utilisateur de l'utilisateur dans le réseau, et le composant de provisionnement est en outre adapté pour fournir, en réponse à la demande, une liste d'adresses de dispositif de dispositifs non-IMS relatifs à l'utilisateur indiqués par l'identité d'utilisateur au noeud de commande d'enregistrement.
